# EUROPÄISCHE PATENTANMELDUNG

(11) **EP 1 270 751 A1**
(43) Veröffentlichungstag der Anmeldung: **02.01.2003**
(21) Anmeldenummer: 02012913.6
(22) Anmeldetag: 11.06.2002
(51) Int. Cl.: C22B 26/22, C22B 21/00, C22B 19/30

(54) **Verfahren zum Reinigen und Wiedereinschmelzen von verunreinigten Leichtmetallen und Leichtmetall-Legierungen**

(30) Priorität: 21.06.2001 DE 10128335
(71) Anmelder: Norsk Hydro Magnesiumgesellschaft mbH, 46240 Bottrop (DE)
(72) Erfinder: Franke, Günter, 44866 Bochum (DE); Friedrich, Karl Bernhard, Prof.Dr.Ing, 52159 Roetgen (DE); Bohling, Claus E., 21255 Wisted (DE)
(74) Vertreter: Gesthuysen, von Rohr & Eggert

(57) **Zusammenfassung**

Dargestellt und beschrieben ist ein Verfahren zum Reinigen und Wiedereinschmelzen von verunreinigten Leichtmetallen oder Leichtmetall-Legierungen, wobei ein beheizbarer und evakuierbarer Tiegel (1) vorgesehen ist, das Material aus Leichtmetall bzw. aus einer Leichtmetall-Legierung in den Tiegel (1) eingebracht wird, der Tiegel (1) in einer ersten Phase evakuiert wird, durch kontinuierliches Absaugen im Unterdruck gehalten wird und die Temperatur des Materials mit der Zeit auf eine erste, unter der Schmelztemperatur des Materials liegende Temperatur erhöht wird und wobei in einer zweiten Phase die Temperatur des Materials weiter bis wenigstens zur Schmelztemperatur des Materials erhöht wird und schließlich das geschmolzene Material abgegossen wird. Erfindungsgemäß ist vorgesehen, daß das Material vor Erreichen seiner Schmelztemperatur mechanisch gerührt wird. Mit dem erfindungsgemäßen Verfahren können Leichtmetalle bzw. Leichtmetall-Legierungen gereinigt werden, die einen Verschmutzungsgrad von bis zu 20 % aufweisen.

## Beschreibung

Die Erfindung betrifft ein Verfahren zum Reinigen und Wiedereinschmelzen von verunreinigten Leichtmetallen oder Leichtmetall-Legierungen, wobei ein beheizbarer und evakuierbarer Tiegel vorgesehen ist, das Material aus Leichtmetall bzw. aus einer Leichtmetall-Legierung in den Tiegel eingebracht wird, der Tiegel in einer ersten Phase evakuiert wird, durch kontinuierliches Absaugen im Unterdruck gehalten wird und die Temperatur des Materials mit der Zeit auf eine erste, unter der Schmelztemperatur des Materials liegende Temperatur erhöht wird und wobei in einer zweiten Phase die Temperatur des Materials weiter bis wenigstens zur Schmelztemperatur des Materials erhöht wird und schließlich das geschmolzene Material abgegossen wird.

Beim Bearbeiten und Verarbeiten von Leichtmetallen und Leichtmetall-Legierungen entstehen unter anderem Späne und Schleifrückstände, die Verunreinigungen aufweisen, welche im wesentlichen organischen Ursprungs sind. Die Späne und Schleifrückstände sind typischerweise mit Kühlschmierstoffen auf Öl- bzw. Wasserbasis, Lackresten und ähnlichem verunreinigt. Häufig fallen Späne von Metall-Legierungen auf Magnesiumbasis an. Diese Legierungen bestehen im wesentlichen aus Magnesium, Aluminium und Zink, wobei das Magnesium den wesentlichen Anteil der Legierung ausmacht. Bei geringen Verunreinigungen einer solchen Legierung, also bei einer höheren Reinheit der Legierung als 99 %, kann eine Reinigung der Legierung mit herkömmlichen Mitteln erfolgen. Für Legierungen mit geringeren Reinheiten sind aus dem Stand der Technik jedoch keine Vorrichtungen und Verfahren zum effektiven Reinigen bekannt.

Daher ist es die Aufgabe der Erfindung, ein Verfahren zum Reinigen und Wiedereinschmelzen von verunreinigten Leichtmetallen und Leichtmetall-Legierungen anzugeben, mit dem auch stark verunreinigte Leichtmetalle bzw. Leichtmetall-Legierungen auf eine effektive und sichere Weise gereinigt und wieder eingeschmolzen werden können.

Ausgehend von dem eingangs beschriebenen Verfahren ist das erfindungsgemäße Verfahren dadurch gekennzeichnet, daß das Material vor Erreichen seiner Schmelztemperatur mechanisch gerührt wird. Das mechanische Rühren ist z. B. mit einem Impeller oder durch das Beaufschlagen mit einem Magnetfeld möglich. Diesbezüglich hat sich ein Induktionsrühren im niederfrequenten Bereich bei ca. 150 Hz besonders bewährt. Außerdem wird das Material durch das Rühren bei Verwendung von Schmelzsalz effektiv in die typischerweise bereits flüssige Salzschmelze eingetragen, so daß Metallbrände vermieden werden. Metallbrände entstehen üblicherweise erst, wenn die Schmelztemperatur des Metalls bzw. der Metall-Legierung erreicht ist und eine Abdeckung mit Salz nicht möglich gewesen ist. Zudem wird durch das mechanische Rühren die erforderliche Menge an Schmelzsalz reduziert. Nach Erreichen der Schmelztemperatur wird durch das mechanische Rühren das Aufbrechen der Oxidschichten auf den einzelnen Spänen oder Schleifrückständen erleichtert, und es wird eine bessere Phasentrennung zwischen Salzschlacke einerseits und dem Material aus Leichtmetall bzw. einer Leichtmetall-Legierung andererseits erzielt.

Grundsätzlich ist es möglich, die zweite Phase außerhalb des Tiegels durchzuführen, in den das Material eingangs eingebracht worden ist. Insbesondere ist nämlich die Durchführung der zweiten Phase in einem anderen Tiegel möglich. Gemäß einer bevorzugten Weiterbildung der Erfindung ist jedoch vorgesehen, daß das Material in der zweiten Phase in dem Tiegel verbleibt.

Zur Durchführung des erfindungsgemäßen Verfahrens ist es grundsätzlich lediglich erforderlich, daß der Tiegel, in dem die zweite Phase durchgeführt wird, beheizbar ist. Dazu ist es gemäß einer bevorzugten Weiterbildung der Erfindung vorgesehen, daß jedenfalls der Tiegelboden beheizbar ist. Insbesondere kann am Tiegelboden ein als Wiederstandsheizung ausgebildetes Heizelement vorgesehen sein. Auf diese Weise wird vermieden, daß sich am Boden des Tiegels kalte Zonen bilden, was die möglicherweise erforderliche Entnahme von Fremdmaterialen, wie Eisenspänen, mittels z.B. eines Greifers oder einer Kelle aus dem Tiegel erleichtert. Außerdem wird durch den beheizbaren Tiegelboden erreicht, daß das Schmelzsalz zwischen die Verunreinigungen in dem Material dringen kann, so daß die Ausbeute an rückgewonnenem reinen Material erhöht wird.

Mit dem erfindungsgemäßen Verfahren lassen sich Leichtmetalle bzw. Leichtmetall-Legierungen mit maximal 10 Gew. % Öl-Wasser-Emulsionen, wie Kühlschmierstoffen und Schneidölen, und zusätzlichen sonstigen organischen Verunreinigungen von maximal 10 Gew. %, wie Lacken, Korrosionsinhibitoren, Oberflächenbehandlungsmittel usw., reinigen. Bei den Kühlschmierstoffen kann es sich um Öl-Wasser-Emulsionen mit einem Wassergehalt von 50 bis 90 % handeln. Kühlschmierstoffe, die zu 100 % aus Kohlenwasserstoffen bestehen, sind jedoch ebenfalls unproblematisch.

Als zu reinigende Legierungen kommen im wesentlichen die schon eingangs genannten Legierungen in Betracht, die im wesentlichen aus Magnesium, Aluminium und Zink bestehen. Das erfindungsgemäße Verfahren ist jedoch auch für andere Leichtmetall-Legierungen verwendbar, wobei das erfindungsgemäße Verfahren jedoch besonders für solche Legierungen geeignet ist, deren Basis Magnesium ist.

Grundsätzlich kann das Absaugen auch in der zweiten Phase aufrecht erhalten werden. Gemäß einer bevorzugten Ausführungsform der Erfindung ist jedoch vorgesehen, daß in der zweiten Phase kein Absaugen mehr erfolgt.

Wenn das Leichtmetall bzw. die Leichtmetall-Legierung in feiner Form anfallen, nämlich z.B. als Späne und Schleifrückstände, ist es grundsätzlich möglich, diese in unveränderter Form dem erfindungsgemäßen Verfahren zu unterziehen, die in feiner Form vorliegenden verunreinigten Leichtmetalle und Leichtmetall-Legierungen also in der Form in den Tiegel einzubringen, in der sie beim Bearbeiten des Leichtmetalls bzw. der Leichtmetall-Legierung angefallen sind. Gemäß einer bevorzugten Weiterbildung der Erfindung ist jedoch vorgesehen, daß die in feiner Form vorliegenden verunreinigten Leichtmetalle und Leichtmetall-Legierungen vor dem Einbringen in den Tiegel zu Briketts gepreßt werden. Dies erleichtert das Einbringen des zu behandelnden Materials, das kontinuierlich über eine Schleuse oder diskontinuierlich nach Abschluß des letzten Schmelzzyklus erfolgen kann.

Im allgemeinen ist es unter sicherheitstechnischen Aspekten möglich, das Verfahren lediglich unter Verwendung eines zumindest zeitweise anliegenden Unterdrucks durchzuführen. Gemäß einer bevorzugten Weiterbildung der Erfindung ist jedoch vorgesehen, daß zur zusätzlichen Sicherheit das in den Tiegel eingebrachte Material mit einem Inertgas überlagert wird. Möglichen Bränden des Leichtmetalls wird auf diese Weise zusätzlich entgegengewirkt. Als Inertgas kommen typischerweise Stickstoff oder ein schwefelhaltiges Luftgemisch in Frage. Die Überlagerung des Inertgases kann lediglich in der ersten Phase oder lediglich in der zweiten Phase, jedoch auch in beiden Phasen erfolgen.

Der Unterdruck, auf dem der Tiegel in der ersten Phase gehalten wird, liegt vorzugsweise im Bereich zwischen 5 und 900 hPa. Während der Unterdruck in dem Tiegel in der ersten Phase in diesem Bereich gehalten wird, wird die Temperatur in dem Tiegel vorzugsweise, nämlich insbesondere bei der Verwendung des erfindungsgemäßen Verfahrens für Magnesium oder Magnesium-Legierungen, von einer Temperatur von etwa 30° C auf eine Temperatur zwischen 250° C und 350° C erhöht.

Die Bestimmung des Zeitpunkts, zu dem die erste Phase abgeschlossen werden soll, kann anhand von Meßdatenreihen und Erfahrungswerten ermittelt werden. Gemäß einer bevorzugten Weiterbildung der Erfindung ist jedoch vorgesehen, daß das Ende der ersten Phase in Abhängigkeit von dem konkret durchgeführten Verfahren ermittelt wird. Dazu ist vorgesehen, daß die Abgasmenge pro Zeit erfaßt wird und das Ende der ersten Phase in Abhängigkeit davon bestimmt wird, ob die Abgasmenge pro Zeit unter einen vorbestimmten Wert gefallen ist. Gleichzeitig oder alternativ dazu ist vorgesehen, daß die Abgastemperatur erfaßt wird und das Ende der ersten Phase in Abhängigkeit davon bestimmt wird, ob die Abgastemperatur einen vorbestimmten Wert überstiegen hat. Dieser vorbestimmte Wert der Abgastemperatur liegt vorzugsweise, nämlich insbesondere bei der Verwendung des erfindungsgemäßen Verfahrens für Magnesium oder Magnesium-Legierungen, in einem Bereich zwischen 250° C und 350° C.

Erfindungsgemäß ist vorgesehen, daß die Temperatur in dem Tiegel in der zweiten Phase erhöht wird. Vorzugsweise erfolgt die Erhöhung der Temperatur bei der Verwendung des erfindungsgemäßen Verfahrens für Magnesium oder Magnesium-Legierungen vorerst auf ca. 600° C. Bei dieser Temperatur sind die Magnesium-Materialen typischerweise pastös und damit plastisch verformbar. Danach erfolgt eine weitere Erhöhung der Temperatur auf wenigstens 650° C. Ab einer solchen Temperatur liegen die zuvor schon angesprochenen auf Magnesium basierenden Legierungen typischerweise in vollständig geschmolzener Form vor.

Außerdem ist gemäß einer bevorzugten Weiterbildung der Erfindung vorgesehen, daß in dem Tiegel, in dem die zweite Phase durchgeführt wird, zusätzlich zu den verunreinigten Leichtmetallen bzw. Leichtmetall-Legierungen gleiches Leichtmetall bzw. eine gleiche Leichtmetall-Legierung in reinerer Form als stükkiges Material vorgesehen wird. Beim Schmelzen des zu reinigenden Materials dient dieses stückige Material als Schmelzstartpunkt und erleichtert somit das Ankoppeln.

Vorzugsweise wird das Abgas einer Abgasreinigung unterzogen. Dabei weist die Abgasreinigung eine Abgaskondensation und/oder eine Abgasnachverbrennung und/oder eine Entdioxinierung auf. Das gereinigte Abgas kann dann über einen Kamin freigegeben werden.

Nach dem vollständigen Wiedereinschmelzen des Leichtmetalls bzw. der Leichtmetall-Legierung kann das Leichtmetall bzw. die Leichtmetall-Legierung direkt abgegossen werden. Gemäß einer bevorzugten Weiterbildung der Erfindung ist jedoch vorgesehen, daß oberhalb der Schmelztemperatur des Leichtmetalls bzw. der Leichtmetall-Legierung, im Falle von Magnesium bzw. einer auf Magnesium basierenden Legierung vorzugsweise bei 720° C bis 750° C, eine Ruhephase zum Absetzen erfolgt, in der sich die metallische Phase von der Schlackenphase trennen kann. Die leichtere Schlacke kann dann abgeschöpft und dekantiert werden, um danach die flüssige Metallphase abzugießen. Falls Raffinationssalz eingesetzt wird, das eine höhere Dichte als das Leichtmetall bzw. die Leichtmetall-Legierung aufweist, kann dies danach aus dem Tiegel dekantiert werden.

Im einzelnen gibt es nun eine Vielzahl von Möglichkeiten, das erfindungsgemäße Verfahren auszugestalten und weiterzubilden. Dazu wird auf die dem Patentanspruch 1 nachgeordneten Patentansprüche sowie die nachfolgende Beschreibung eines bevorzugten Ausführungsbeispiels der Erfindung unter Bezugnahme auf die Zeichnung verwiesen. In der Zeichnung zeigt die einzige Figur eine Vorrichtung zum Durchführen eines Verfahrens gemäß einem bevorzugten Ausführungsbeispiel der Erfindung.

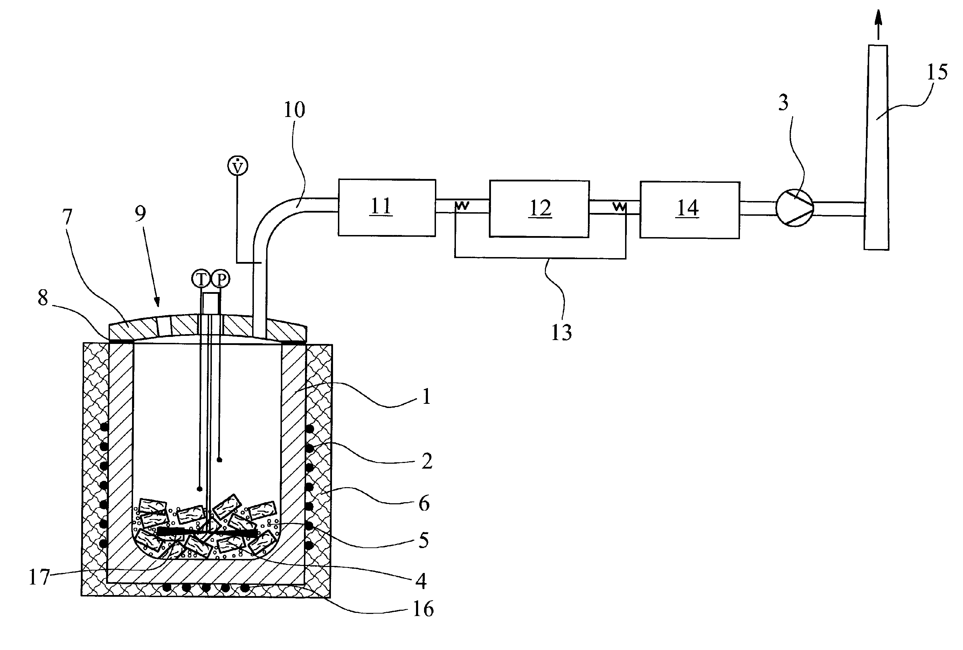

Gemäß dem aus Fig. 1 ersichtlichen bevorzugten Ausführungsbeispiel der Erfindung ist ein Tiegel 1 vorgesehen, der mit Hilfe einer Induktionsheizung 2 beheizt und mittels einer Vakuumpumpe 3 evakuiert werden kann. In den Tiegel 1 sind Briketts 4 eingebracht, die zuvor aus Spänen einer auf Magnesium basierenden Leichtmetall-Legierung gepreßt worden sind, wobei die Leichtmetall-Legierung einen Verschmutzungsgrad von bis zu 20 Gew. % aufweisen kann. Dabei darf die sogenannte Feuchte aus Kühlschmierstoffen maximal 10 Gew. % ausmachen, während die verbleibenden 10 Gew. % auf sonstige organische Verunreinigungen, wie Lacke, Korrosionsinhibitoren, Oberflächenbehandlungsmittel usw. entfallen können. Mit kleinen Kreisen ist in der Figur ferner ein zusätzlich zu den Briketts 4 in den Tiegel 1 eingebrachtes Schmelzsalz 5 gekennzeichnet.

Der Tiegel 1 weist eine Isolierung 6 auf, in deren innerem Randbereich die Induktionsheizung 2 vorgesehen ist. Außerdem ist in der Isolierung 6 unterhalb des Bodens des Tiegels 1 ein weiteres Heizelement 16 vorgesehen. Der Tiegel 1 ist mit einem Deckel 7 vakuumdicht verschlossen, nämlich indem zwischen dem Deckel 7 und dem Tiegel 1 eine Dichtung 8 vorgesehen ist. In dem Deckel 7 ist ein Zulaß 9 vorgesehen, über den in den Tiegel 1 Inertgas zugegeben werden kann, nämlich Stickstoff oder ein schwefelhaltiges Luftgemisch. Wie ferner schematisch angedeutet, werden in dem Tiegel 1 die Temperatur sowie der Druck bestimmt.

Über eine Abgasleitung 10 wird der Abgasstrom aus dem Tiegel 1 herausgeführt, wobei schematisch angedeutet ist, daß der Volumenstrom des Abgases gemessen wird. Das über die Abgasleitung 10 aus dem Tiegel 1 abgeführte Abgas wird zuerst einem Abgaskondensator 11 zugeführt, der wassergekühlt ist und bei einer Temperatur zwischen 10° C und 30° C betrieben wird. In dem Abgaskondensator 11 werden Öle und ggf. Wasser abgeschieden.

Dem Abgaskondensator 11 folgt eine Abgasnachverbrennungseinrichtung 12, die typischerweise bei einer Temperatur von 1200° C betrieben wird. Der Betrieb der Abgasnachverbrennungseinrichtung 12 erfolgt über dieser zugeführtes Erdgas und zusätzliche Brennerluft. Zum Vorheizen des in die Abgasnachverbrennungseinrichtung 12 eintretenden Abgases ist ein Wärmetauscher 13 vorgesehen. Mit Hilfe des Wärmetauschers 13 wird heißes Abgas, das die Abgasnachverbrennungseinrichtung 12 schon durchlaufen hat, dazu verwendet, in die Abgasnachverbrennungseinrichtung 12 eintretendes Abgas vorzuwärmen.

Schließlich ist ein Dioxinkatalysator 14 vorgesehen, mit dem eine Entdioxinierung des Abgases erfolgt. Am Ende der Abgasleitung 10, dem Dioxinkatalysator 14 nachfolgend, befindet sich schließlich die Vakuumpumpe 3, mit Hilfe derer die verbrannten Abgase einem Kamin 15 zugeführt und dann freigesetzt werden.

Der Betrieb der aus Fig. 1 ersichtlichen Vorrichtung zur Durchführung des Verfahrensgemäß dem bevorzugten Ausführungsbeispiel der Erfindung ist nun wie folgt:

In den Tiegel 1 werden die Briketts 4 zusammen mit dem Schmelzsalz 5 eingebracht, und der Tiegel 1 wird mit dem Deckel 7 vakuumdicht verschlossen. Dann erfolgt in der ersten Phase des Verfahrens gemäß dem bevorzugten Ausführungsbeispiel der Erfindung ein Evakuieren des Tiegels 1 und ein kontinuierliches Absaugen, so daß ein Unterdruck im Bereich zwischen 5 und 900 hPa aufrechterhalten wird. Gleichzeitig wird die Temperatur in dem Tiegel 1 erhöht, nämlich von einer typischen Umgebungstemperatur von etwa 30° C kontinuierlich auf eine Temperatur zwischen 250° C und 350° C. In der ersten Phase des Verfahrens erfolgt noch kein Schmelzen der Briketts 4, sondern lediglich ein Austreten der in den Briketts 4 enthaltenen Verunreinigungen, wie Öle, Lacke usw. Der Volumenstrom des Abgases wird gemessen, und das Ende der ersten Phase wird dadurch bestimmt, daß der erfaßte Volumenstrom unter einen vorbestimmten Wert fällt. Dies ist ein Zeichen dafür, daß die Reinigung der Briketts 4 von den in ihnen enthaltenen Verunreinigungen im wesentlichen abgeschlossen ist und nunmehr zur zweiten Phase übergegangen werden kann, in der das eigentliche Wiedereinschmelzen der Leichtmetall-Legierung erfolgt.

In dieser zweiten Phase erfolgt kein Absaugen mehr, jedoch wird weiterhin Inertgas in den Tiegel 1 eingeleitet. Außerdem wird die Temperatur in dem Tiegel zuerst auf ca. 600° C erhöht. Bei dieser Temperatur ist das Magnesium-Material pastös und damit bereits plastisch verformbar, so daß ein Eintragen der Briketts 4 in die Salzschmelze erfolgt. Danach wird die Temperatur auf wenigstens 650° C erhöht. Bei dieser Temperatur liegt die zuvor schon genannte auf Magnesium basierende Leichtmetall-Legierung in vollständig geschmolzener Form vor, so daß ein Abgießen aus dem Tiegel getrennt nach flüssiger Leichtmetall-Legierung einerseits und Schlacke andererseits erfolgen kann. Dabei ist sowohl ein Bodenabzug als auch ein Kippen des Tiegels 1 denkbar.

Die Wiederbefüllung des Tiegels kann üblicherweise nur diskontinuierlich erfolgen, um ein unkontrolliertes Abbrennen der organischen Bestandteile bei zu hohen Temperaturen in dem Tiegel 1 zu unterbinden. Nach dem Abgießen ist insofern eine Befüllung erst wieder zulässig, wenn die Temperatur in dem Tiegel 1 unterhalb der Flammtemperatur der anhaftenden organischen Bestandteile fällt.

Alternativ dazu ist durch einen sehr hohen Einsatz von Inertgas eine starke Verdünnung der brennbaren Gase möglich, wodurch die kritische Temperatur heraufgesetzt werden kann und auch ein kontinuierliches Einbringen des Materials über eine nicht weiter dargestellte Schleuse möglich wird.

## Patentansprüche

1. Verfahren zum Reinigen und Wiedereinschmelzen von verunreinigten Leichtmetallen oder Leichtmetall-Legierungen, wobei ein beheizbarer und evakuierbarer Tiegel (1) vorgesehen ist, das Material aus Leichtmetall bzw. aus einer Leichtmetall-Legierung in den Tiegel (1) eingebracht wird, der Tiegel (1) in einer ersten Phase evakuiert wird, durch kontinuierliches Absaugen im Unterdruck gehalten wird und die Temperatur des Materials mit der Zeit auf eine erste, unter der Schmelztemperatur des Materials liegende Temperatur erhöht wird und wobei in einer zweiten Phase die Temperatur des Materials weiter bis wenigstens zur Schmelztemperatur des Materials erhöht wird und schließlich das geschmolzene Material abgegossen wird, **dadurch gekennzeichnet, daß** das Material vor Erreichen seiner Schmelztemperatur mechanisch gerührt wird.

2. Verfahren nach Anspruch 1, **dadurch gekennzeichnet, daß** das mechanische Rühren erfolgt, sobald das Material einen pastösen Zustand angenommen hat.

3. Verfahren nach Anspruch 1 oder 2, **dadurch gekennzeichnet, daß** das mechanische Rühren durch einen Impeller (17) oder durch das Beaufschlagen mit einem Magnetfeld erfolgt.

4. Verfahren nach einem der Ansprüche 1 bis 3, **dadurch gekennzeichnet, daß** das Material in der zweiten Phase in dem Tiegel (1) verbleibt.

5. Verfahren nach Anspruch 4, **dadurch gekennzeichnet, daß** der Tiegelboden beheizbar ist.

6. Verfahren nach einem der Ansprüche 1 bis 5, **dadurch gekennzeichnet, daß** in der zweiten Phase kein Absaugen mehr erfolgt.

7. Verfahren nach einem der Ansprüche 1 bis 6, **dadurch gekennzeichnet, daß** das Material aus verunreinigtem Leichtmetall bzw. aus einer verunreinigten Leichtmetall-Legierung vor dem Einbringen in den Tiegel (1) zu Briketts (4) gepreßt wird.

8. Verfahren nach einem der Ansprüche 1 bis 7, **dadurch gekennzeichnet, daß** das in den Tiegel (1) eingebrachte Material in der ersten Phase und/oder in der zweiten Phase mit einem Inertgas überlagert wird.

9. Verfahren nach einem der Ansprüche 1 bis 8, **dadurch gekennzeichnet, daß** die Abgasmenge pro Zeit erfaßt wird und das Ende der ersten Phase in Abhängigkeit davon bestimmt wird, ob die Abgasmenge pro Zeit unter einen vorbestimmten Wert gefallen ist.

10. Verfahren nach einem der Ansprüche 1 bis 8, **dadurch gekennzeichnet, daß** die Abgastemperatur erfaßt wird und das Ende der ersten Phase in Abhängigkeit davon bestimmt wird, ob die Abgastemperatur einen vorbestimmten Wert überstiegen hat.

11. Verfahren nach einem der Ansprüche 1 bis 10, **dadurch gekennzeichnet, daß** zusammen mit dem Material Schmelzsalz (5) erhitzt wird.

12. Verfahren nach einem der Ansprüche 1 bis 11, **dadurch gekennzeichnet, daß** in dem Tiegel (1) zusätzlich zu dem Material aus verunreinigtem Leichtmetall bzw. verunreinigter Leichtmetall-Legierung gleiches Leichtmetall bzw. eine gleiche Leichtmetall-Legierung in reinerer Form als stückiges Material vorgesehen wird.

13. Verfahren nach einem der Ansprüche 1 bis 12, **dadurch gekennzeichnet, daß** oberhalb der Schmelztemperatur des Leichtmetalls bzw. der Leichtmetall-Legierung, im Falle von Magnesium bzw. einer auf Magnesium basierenden Legierung vorzugsweise bei 720° C bis 750°C, eine Ruhephase zum Absetzen erfolgt, in der sich die metallische Phase von der Schlackenphase trennen kann.
